# EUROPEAN PATENT APPLICATION

(11) **EP 4 783 021 A1**
(43) Date of publication of application: **29.07.2026**
(21) Application number: 24869705.4
(22) Date of filing: 29.04.2024
(51) Int. Cl.: G06F 16/172, G06F 11/30

(54) **DATA STORAGE METHOD AND APPARATUS, COMPUTER DEVICE, AND STORAGE SYSTEM**

(30) Priority: 27.09.2023 CN 202311266328
(71) Applicant: HUAWEI TECHNOLOGIES CO., LTD., Shenzhen 518129 (CN)
(72) Inventor: REN, Ren, Shenzhen, Guangdong 518129 (CN); CHEN, Renhai, Shenzhen, Guangdong 518129 (CN); LI, Guojie, Shenzhen, Guangdong 518129 (CN); DONG, Hao, Shenzhen, Guangdong 518129 (CN)
(74) Representative: Thun, Clemens
(86) International application number: PCT/CN2024/090663
(87) International publication number: WO 2025/066137

(57) **Abstract**

This application discloses a data storage method and apparatus, a computer device, and a storage system, and relates to the computer field. The method includes: performing a database operation on a page of a database to obtain an updated page; caching the updated page in a storage of an application server; and storing a transaction log corresponding to the updated page in a storage server. In this way, the updated page is stored in the application server, and the transaction log is stored in the storage server. In comparison with a method in which the updated page and the transaction log are stored in the storage server, in this method, transmission of the updated page to the storage server is avoided, occupation of bandwidth between the application server and the storage server is reduced, and a cache of a storage array in the storage server is not occupied.

## Description

This application claims priority to Chinese Patent Application No. 202311266328.3, filed with the China National Intellectual Property Administration on September 27, 2023 and entitled "DATA STORAGE METHOD AND APPARATUS, COMPUTER DEVICE, AND STORAGE SYSTEM", which is incorporated herein by reference in its entirety.

### TECHNICAL FIELD

This application relates to the computer field, and in particular, to a data storage method and apparatus, a computer device, and a storage system.

### BACKGROUND

Currently, a network attached storage (Network Attached Storage, NAS) is used to store data in a database, to ensure reliability and availability of the database. For example, after a database operation is performed on a page of the database, the page of the database and a transaction log are stored in a storage server. However, larger storage space needs to be occupied for the storage server to cache the page of the database. In addition, transmission of the page of the database between an application server and the storage server also needs to consume much bandwidth between the application server and the storage server.

### SUMMARY

This application provides a data storage method and apparatus, a computer device, and a storage system, to reduce storage space that needs to be occupied for a storage server to cache a page of a database, and reduce bandwidth consumption between an application server and the storage server.

According to a first aspect, a data storage method is provided. The method is applied to an application server, the application server is connected to a storage server, the application server is configured to run a database, and the storage server is configured to store data in the database. The method includes: performing a database operation on a page of the database; caching an updated page in a storage of the application server; and storing a transaction log corresponding to the updated page in the storage server.

In comparison with transmitting the updated page from the application server to the storage server and storing the updated page in the storage server, resulting in consumption of bandwidth between the application server and the storage server and occupying storage space of the storage server, in the method provided in this application, the updated page is stored in the application server, and the transaction log corresponding to the updated page is stored in the storage server, so that transmission of the updated page to the storage server is avoided, and occupation of bandwidth between the application server and the storage server is reduced. In addition, because the storage server does not need to cache the updated page, storage space that is of the storage server and that is used for caching is saved.

In a possible implementation, caching the updated page in the storage of the application server includes: caching a page identifier and data of the updated page in the storage of the application server, where the page identifier indicates the page and the updated page.

In this way, based on the page identifier, the application server determines the updated page from the storage of the application server as soon as possible, or finds the updated page as soon as possible.

In another possible implementation, storing the transaction log corresponding to the updated page in the storage server includes: storing the page identifier and the transaction log in the storage server. The page identifier indicates the page and the updated page.

In this way, it is convenient for the storage server to generate the updated page based on the transaction log, and establish a correspondence between the page identifier, the updated page, and the transaction log. When the application server is faulty, the updated page is obtained from the storage server based on the page identifier as soon as possible to restore data.

In another possible implementation, the method further includes: The application server receives a response message sent by the storage server, where the response message may indicate that the updated page indicated by the page identifier corresponding to the transaction log has been stored. It may be understood that the response message indicates that the storage server has generated, based on the transaction log, the updated page indicated by the page identifier. In this case, the application server may query, based on the page identifier, the updated page cached by the application server, and invalidate the updated page indicated by the page identifier.

Because the storage server has stored the updated page, invalidating the updated page stored in the application server releases storage space of the application server used to cache the updated page, and facilitates storing a latest updated page obtained by performing the database operation on the page of the database.

In another possible implementation, invalidating the updated page stored in the storage of the application server includes: invalidating, based on an access characteristic of the updated page, the updated page stored in the storage of the application server.

For example, the access characteristic is a characteristic of determining whether the updated page is frequently accessed. If the access characteristic of the updated page indicates that the updated page is frequently accessed, the updated page may be referred to as a hot page, and the updated page may not need to be invalidated. If the access characteristic of the updated page indicates that the updated page is not frequently accessed, the updated page may be referred to as a cold page, and the updated page may be invalidated.

In this way, storage space of the application server used to cache the updated page can be released.

In another possible implementation, invalidating the updated page stored in the storage of the application server includes: invalidating, based on a storage capacity of the storage of the application server, the updated page stored in the storage of the application server.

Because the storage capacity of the storage is limited, when storage space of the storage is exhausted, the storage cannot store a new updated page. In this case, the updated page that has been stored in the storage server is invalidated, to ensure that the storage of the application server has sufficient space to store the new updated page. This may reduce occupation of the storage of the application server by the updated page that has been stored in the storage server. A frequently accessed page can be obtained in a timely manner when the frequently accessed page needs to be scheduled.

In another possible implementation, the method further includes: obtaining the updated page from the storage of the application server based on a query request.

In this way, because the updated page is cached in the application server, when the application server needs to perform the database operation on the updated page, the updated page can be obtained as soon as possible.

In another possible implementation, the method further includes: when the updated page is not read from the storage of the application server, obtaining the updated page from the storage server.

In this way, when the application server is faulty, the updated page may be obtained from the storage server. This resolves a problem of long page restoration time, and may ensure reliability and availability of the database.

According to a second aspect, a data storage apparatus is provided, and includes: a communication module, configured to obtain a database operation; and a processing module, configured to perform the database operation on a page of a database to obtain an updated page. The processing module is further configured to cache the updated page in a storage of an application server; and the processing module is further configured to store a transaction log corresponding to the updated page in a storage server.

In a possible implementation, when caching the updated page in the storage of the application server, the processing module is specifically configured to cache a page identifier and the updated page in the storage of the application server, where the page identifier indicates the page and the updated page.

In a possible implementation, the processing module stores the transaction log corresponding to the updated page in the storage server, and is specifically configured to store the page identifier and the transaction log in the storage server, where there is a correspondence between the page identifier and the transaction log, and the page identifier indicates the page and the updated page.

In a possible implementation, the communication module is further configured to receive a response message sent by the storage server, where the response message indicates that the updated page indicated by the page identifier corresponding to the transaction log has been stored; and the processing module is further configured to invalidate the updated page stored in the storage of the application server.

In a possible implementation, the processing module invalidates the updated page stored in the storage of the application server, and is specifically configured to invalidate, based on an access characteristic of the updated page, the updated page stored in the storage of the application server.

In a possible implementation, the processing module invalidates the updated page stored in the storage of the application server, and is specifically configured to invalidate, based on a storage capacity of the storage of the application server, the updated page stored in the storage of the application server.

In a possible implementation, the processing module is further configured to obtain the updated page from the storage of the application server based on a query request.

In a possible implementation, the processing module is further configured to: when the updated page is not read from the storage of the application server, obtain the updated page from the storage server.

According to a third aspect, a computer device is provided. The computer device includes a storage and a plurality of processors. The storage is configured to store a set of computer instructions. When executing the set of computer instructions, the processor performs operation steps of the method according to any one of the first aspect or the possible implementations of the first aspect.

According to a fourth aspect, a storage system is provided. The storage system includes an application server and a storage server. The application server is configured to perform operation steps of the method according to any one of the first aspect or the possible implementations of the first aspect, and cache a page of a database. The storage server is configured to persistently store the page of the database and a transaction log corresponding to the page of the database.

For technical effects brought by any design manner in the second aspect to the fourth aspect, refer to technical effects brought by the first aspect or different possible implementations of the first aspect. Details are not described herein again.

Based on the implementations provided in the foregoing aspects, the implementations in this application may be further combined to provide more implementations.

### BRIEF DESCRIPTION OF DRAWINGS

FIG. 1 is a diagram of a storage system according to the conventional technology;
FIG. 2 is a diagram of another storage system according to the conventional technology;
FIG. 3 is a diagram of another storage system according to the conventional technology;
FIG. 4 is a diagram of a storage system according to this application;
FIG. 5 is a schematic flowchart of a data storage method according to this application;
FIG. 6 is a schematic flowchart of another data storage method according to this application;
FIG. 7 is a schematic flowchart of another data storage method according to this application;
FIG. 8 is a diagram of a structure of a data storage apparatus according to this application; and
FIG. 9 is a diagram of a computer device according to this application.

### DESCRIPTION OF EMBODIMENTS

For ease of understanding, main terms in this application are first explained.

A database (database) is a system that organizes, stores, and manages data based on a data structure, that is, an electronic filing cabinet. The database may include a relational database or a non-relational database. Data stored in the database may include travel records, purchase records, browsed web pages, sent messages, images, music, sounds, and the like.

A network attached storage (Network Attached Storage, NAS) is a storage apparatus that connects to an application server via a network, and is configured to store data in a centralized manner. The network attached storage may also be referred to as a network storage or a storage server. For example, the network attached storage may include a redundant array of independent disks, and the redundant array of independent disks stores data in a centralized manner. Storing data in the network attached storage can release storage space related to the application server, reduce storage costs of the application server, and improve performance of the application server.

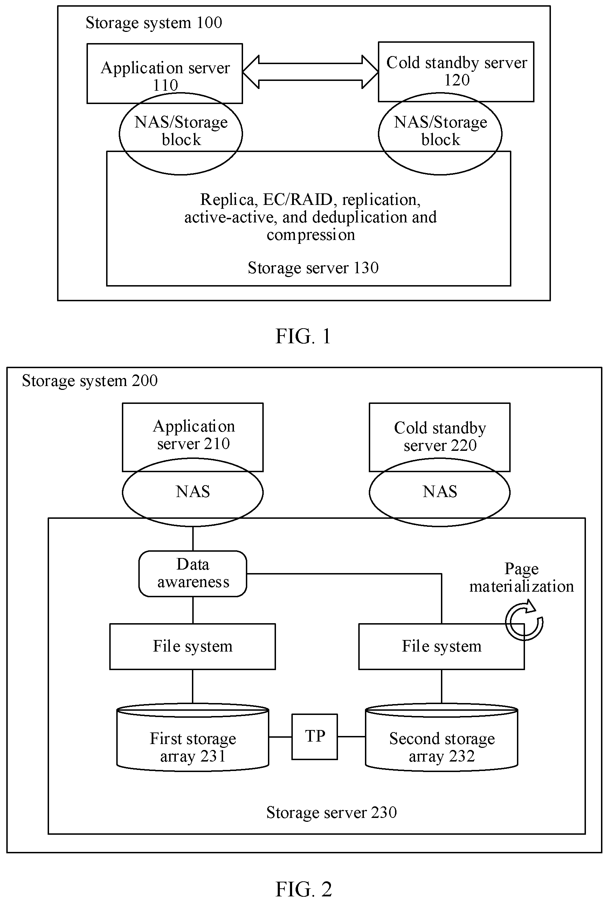

For example, FIG. 1 is a diagram of a storage system according to the conventional technology. As shown in FIG. 1, the storage system 100 includes an application server 110, a cold standby server 120, and a storage server 130. The storage server 130 may serve as a network attached storage of the application server 110 and the cold standby server 120. For example, after performing a database operation on a page of a database based on a database instruction, the application server 110 may generate an updated page and a transaction log. The database instruction includes but is not limited to a MySQL statement, and the database operation includes but is not limited to operations such as writing data, modifying data, and deleting data.

In some embodiments, the application server 110 stores the updated page and the transaction log in the cold standby server 120 and the storage server 130. The cold standby server 120 then stores the updated page and the transaction log in the storage server 130. It may be understood that the storage server 130 stores two updated pages and two transaction logs to ensure data reliability, so that when the application server 110 is faulty, data is obtained from the storage server 130 to restore the updated page. However, this causes the storage server 130 to redundantly store the updated page and the transaction log, occupying excessive storage space of the storage server 130. In addition, transmission of the updated page and the transaction log from the application server 110 to the storage server 130 further occupies bandwidth between the application server 110 and the storage server 130.

In some other embodiments, the application server 110 periodically stores the updated page in the storage server 130. When the application server 110 is faulty, if the application server 110 has not stored the updated page in the storage server 130, the storage server 130 may restore the updated page based on the transaction log, so that the application server 110 obtains data from the storage server 130 to restore the updated page. Because transaction logs are read in sequence, page restoration takes a long time.

Optionally, the storage server 130 has functions such as replica storage, erasure coding (erasure coding, EC)/redundant arrays of independent disks (Redundant Arrays of Independent Disks, RAID), replication, active-active, and deduplication and compression. The EC/RAID may divide a file into smaller storage blocks. The active-active means that both primary and standby storage servers handle user services. The deduplication and compression refer to deleting duplicate data and compressing data obtained through the deletion for storage, to reduce data redundancy.

For another example, FIG. 2 is a diagram of another storage system according to the conventional technology. As shown in FIG. 2, the storage system 200 includes an application server 210, a cold standby server 220, and a storage server 230. The storage server 230 further includes a first storage array 231 and a second storage array 232. The storage server 230 may serve as a network attached storage of the application server 210 and the cold standby server 220. A difference between FIG. 2 and FIG. 1 lies in that a data-aware operation and a page materialization operation are added in FIG. 2. The storage server 230 receives updated pages and transaction logs, and performs the data-aware operation, to be specific, identifying the updated pages and the transaction logs, and storing the updated pages and the transaction logs in different storage arrays. For example, the updated pages and the transaction logs are stored in the first storage array 231, and the transaction logs are stored in the second storage array 232.

The storage server 230 further generates an updated page based on a transaction log, and stores the generated updated page in the second storage array 232. This operation may be referred to as page materialization. For example, the storage server 230 stores the updated page in a file system format.

In addition, the storage server 230 receives the updated page and the transaction log for the first time, that is, at a time point (Time_Point, TP) at which the storage server 230 identifies the first storage array, and the updated page and the transaction log that are stored in the first storage array 231 are replicated and stored in the second storage array 232.

Although the cold standby server 220 does not need to transmit the updated page or the transaction log to the storage server 130, this still causes the storage server 130 to redundantly store the updated page and the transaction log, occupying excessive storage space of the storage server 130. In addition, transmission of the updated page and the transaction log from the application server 210 to the storage server 230 further occupies bandwidth between the application server 210 and the storage server 230.

In some embodiments, when the application server 210 is faulty, the application server 210 may obtain the updated page from the storage server 230. However, in some embodiments, because the speed of generating a page through the page materialization cannot be ensured, the application server 210 fails to obtain the updated page from the storage server 230, and may need to wait before obtaining the updated page. Therefore, there is still a problem of long page restoration time.

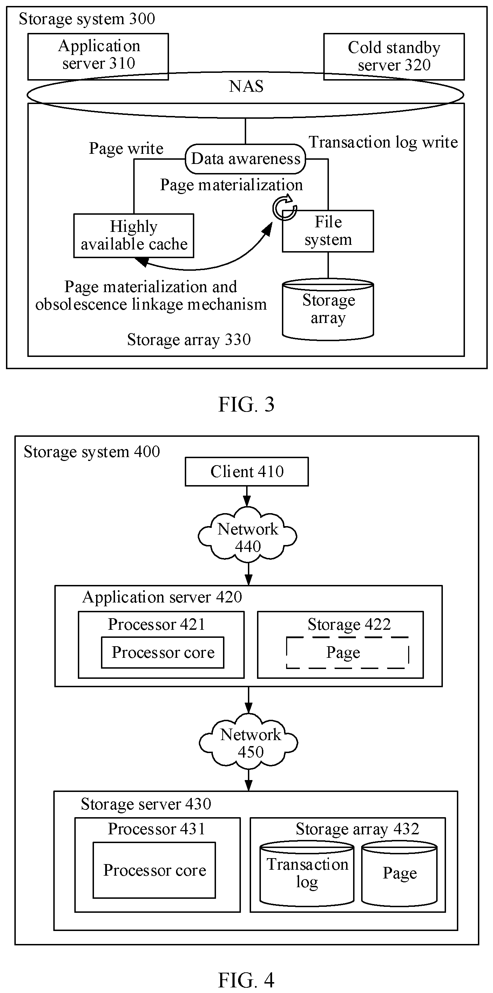

For another example, FIG. 3 is a diagram of another storage system according to the conventional technology. As shown in FIG. 3, the storage system 300 includes an application server 310, a cold standby server 320, and a storage server 330. The storage server 330 may serve as a network attached storage of the application server 310. A difference between FIG. 3 and FIG. 2 lies in that a page obsolescence linkage mechanism is added in FIG. 3. The storage server 330 performs a data-aware operation, and the storage server 330 stores an identified updated page in a highly available cache. The storage server 330 generates an updated page based on an identified transaction log.

In some embodiments, because a storage capacity of the highly available cache is limited, when storage space of the highly available cache is exhausted, the highly available cache cannot store a new updated page. In this case, the updated page that has been stored in the highly available cache is invalidated, to ensure that the highly available cache has sufficient space to store the new updated page. For example, when the updated page generated based on the transaction log is stored in a storage array, the updated page stored in the highly available cache may be invalidated. This operation may become the page obsolescence linkage mechanism. The operation can reduce dual-replica storage of the updated page, but caching the updated page in a cache memory increases storage costs.

However, this still causes the storage server 130 to redundantly store the updated page and the transaction log, occupying excessive storage space of the storage server 130. In addition, transmission of the updated page and the transaction log from the application server 310 to the storage server 330 further occupies bandwidth between the application server 310 and the storage server 330.

To resolve a problem of bandwidth occupation and highly available cache occupation during storage, this application provides a data storage method. To be specific, an application server is connected to a storage server, the application server identifies a transaction log and an updated page, stores the updated page in a storage of the application server, and stores a transaction log corresponding to the updated page in the storage server. In this way, transmission of the updated page to the storage server is avoided, and occupation of bandwidth between the application server and the storage server is reduced. The updated page is cached in the application server, so that a waste of a highly available cache of the storage server is reduced.

The data storage method provided in this application may be applied to a scenario of storage-compute separation, or may be applied to other types of storage systems.

The following describes, in detail with reference to the accompanying drawings, implementations of the data storage method provided in this application. FIG. 4 is a diagram of a structure of a storage system according to this application. As shown in FIG. 4, the storage system 400 includes a client 410, an application server 420, and a storage server 430.

The client 410 accesses the application server 420 via a network 440. The application server 420 is connected to the storage server 430 via a network 450.

In this embodiment of this application, the application server 420 may run a database. The application server 420 receives a database instruction of the client 410, and may perform a database operation on a page of the database based on the database instruction, to generate an updated page and a transaction log.

In some embodiments, the application server 420 includes a processor 421 and a storage 422. The processor 421 is a control center of the application server 420. The processor 421 may be a compute unit having a computing capability, for example, a central processing unit (central processing unit, CPU), a graphics processing unit (graphics processing unit, GPU), a data processing unit (data processing unit, DPU), or a neural processing unit (neural processing unit, NPU). The processor 421 includes one or more processor cores (core).

In this embodiment of this application, the processor 421 is configured to: perform an operation like identifying a transaction log and an updated page, store the identified updated page in the storage 422, and store the identified transaction log in the storage server 430.

The storage 422 is cache space of the application server 420, may read and write data at any time, and serves as a temporary data storage of an operating system or other running programs. The storage 422 may be a volatile memory pool or a non-volatile memory pool, or may include both a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM) that is used as an external cache. By way of example but not limitative descriptions, many forms of RAMs may be used, for example, a static random access memory (static RAM, SRAM), a dynamic random access memory (DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

In this embodiment of this application, the storage 422 is mainly configured to store the updated page.

The storage server 430 includes a processor 431 and a storage array 432.

The processor 431 is a control center of the storage server 430. The processor 431 may be a compute unit having a computing capability, for example, a CPU, a GPU, a DPU, or an NPU. The processor 431 includes one or more processor cores (core).

In this embodiment of this application, the processor 431 mainly generates an updated page based on the transaction log, and stores the updated page in the storage array 432. The storage array 432 is storage space of the storage server 430, and mainly stores the transaction log and the updated page. The storage array 432 may read and write data at any time, and serve as a temporary data storage of an operating system or other running programs. The storage array 432 may be a volatile memory pool or a non-volatile memory pool, or may include both a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM) that is used as an external cache. By way of example but not limitative descriptions, many forms of RAMs may be used, for example, a static random access memory (static RAM, SRAM), a dynamic random access memory (DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

In this embodiment of this application, the storage array 432 is mainly configured to store the transaction log and the updated page.

The network 440 may be any telecommunication or computer network, including, for example, an enterprise intranet, a wide area network (wide area network, WAN), a local area network (local area network, LAN), a personal area network (personal area network, PAN), or the Internet.

The network 450 may be any telecommunication or computer network, including, for example, an enterprise intranet, a wide area network (wide area network, WAN), a local area network (local area network, LAN), a personal area network (personal area network, PAN), or the Internet.

The device structure shown in FIG. 4 does not constitute a limitation on a communication network. The communication network may include more or fewer components than those shown in the figure, may combine some components, or may have a different component arrangement.

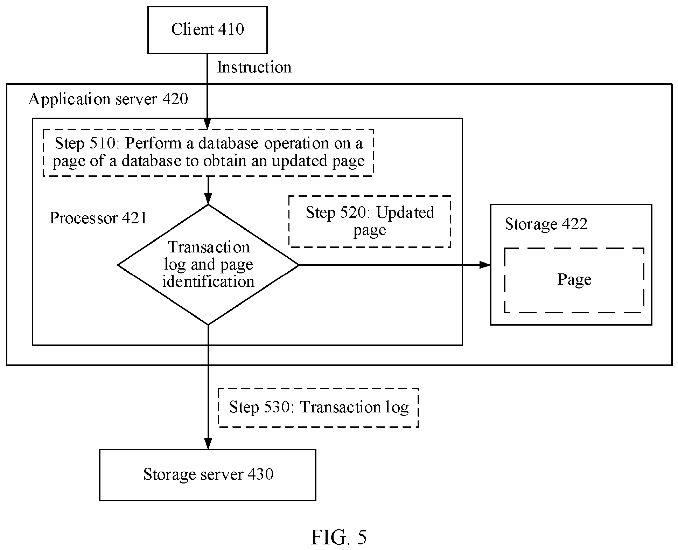

The following describes, in detail with reference to the accompanying drawings, the data storage method provided in this application. FIG. 5 is a schematic flowchart of a data storage method according to this application. Herein, the storage system shown in FIG. 4 is used as an example for description. To be specific, an application server 420 performs a database operation and stores an updated page and a transaction log. As shown in FIG. 5, the method includes the following steps.

Step 510: Perform the database operation on a page of a database to obtain the updated page.

The application server receives a database instruction sent by a client, performs the database operation on the page of the database based on the database instruction, to generate the transaction log and the updated page. The instruction received by the application server includes but is not limited to instructions of the database, such as writing data, modifying data, and deleting data.

After the application server modifies data of the page of the database based on the database instruction, an updated page and a transaction log of the current database operation need to be stored, to ensure data consistency when the application server restores data from a fault or updates the page of the database again.

In some embodiments, the application server identifies the transaction log and the updated page, stores the updated page in a storage, and stores the transaction log in a storage server. For example, a processor of the application server performs a data-aware operation, to be specific, identifying the updated page and the transaction log.

Step 520: Cache the updated page in the storage of the application server.

A page identifier and the updated page are cached in the storage of the application server. The page identifier indicates the page and the updated page.

In some embodiments, the updated page and a correspondence between the page identifier and the updated page are stored in the storage of the application server.

Optionally, the application server stores, in the storage of the application server, the page identifier, a file address, and a page status corresponding to the updated page. For example, the page identifier, the file address, and the page status are stored in the storage based on a correspondence.

Step 530: Store the transaction log corresponding to the updated page in the storage server.

The page identifier and the transaction log are stored in the storage server. The page identifier indicates the page and the updated page.

In some embodiments, the application server transmits the identified transaction log and the page identifier to the storage server via a network. The storage server stores the transaction log and a correspondence between the page identifier and the transaction log in a storage array of the storage server.

In this way, because transmission of the updated page from the application server to the storage server is not needed, occupation of bandwidth between the application server and the storage server is reduced. In addition, there is no need to deploy a cache memory in the storage server, to reduce storage costs.

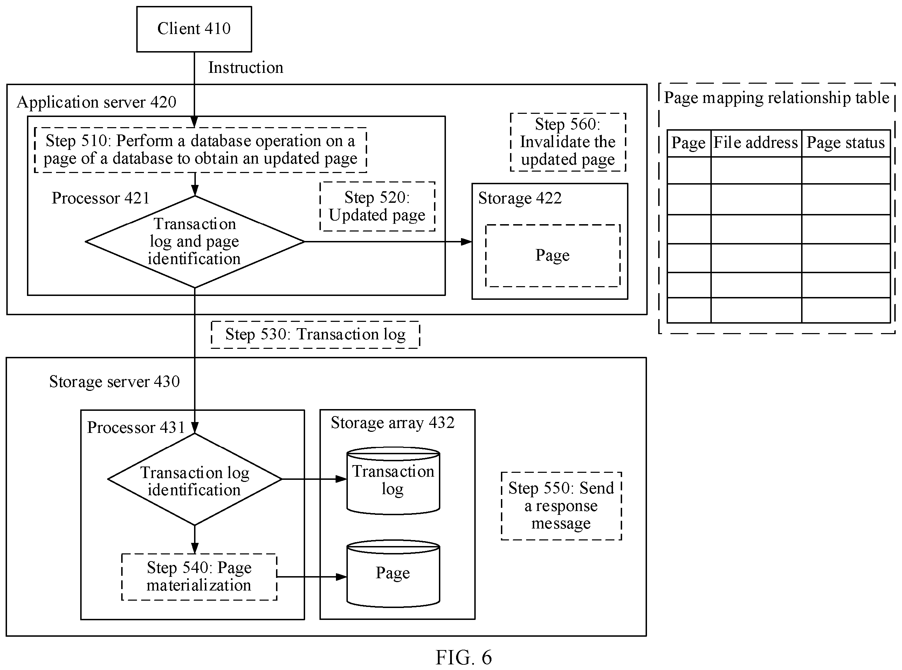

After the updated page is stored in the storage, and the transaction log is stored in the storage server, the storage server may further perform a page materialization operation and perform a page materialization and obsolescence linkage mechanism with the application server, as described in step 540 and step 560 below. FIG. 6 is a schematic flowchart of generating an updated page and invalidating the updated page according to this application. As shown in FIG. 6, the method includes the following steps.

Step 540: The storage server performs page materialization based on a transaction log.

The storage server generates an updated page based on the transaction log, and stores the generated updated page in the storage array. This operation may be referred to as the page materialization. In some embodiments, after the updated page is generated, a response message is sent to the application server, and an obsolescence linkage mechanism is performed. For example, step 550 is performed.

Step 550: The storage server sends the response message to the application server.

After the storage server generates the updated page based on the transaction log, the storage server sends the response message to the application server. The response message indicates that the updated page indicated by a page identifier corresponding to the transaction log has been stored. For example, the response message includes the page identifier.

Step 560: The application server invalidates the updated page.

After receiving the response message, the application server invalidates the updated page indicated by the response message.

In some embodiments, the response message may include the page identifier, and the application server invalidates the updated page indicated by the page identifier. For example, the application server stores a correspondence between the page identifier and the updated page. The application server queries the correspondence between the page identifier and the updated page based on the page identifier included in the response message, and determines the updated page that is indicated by the page identifier and that is in the correspondence, so that the application server invalidates the updated page indicated by the page identifier.

In some other embodiments, the response message may include a file address corresponding to the updated page, and the file address may be a storage address of the updated page that is stored in a file system format. The application server invalidates the updated page indicated by the file address. For example, the application server stores a correspondence between the page file address and the updated page. The application server queries the correspondence between the page file address and the updated page based on the file address included in the response message, and determines the updated page that is indicated by the file address and that is in the correspondence, so that the application server invalidates the updated page indicated by the file address.

In some other embodiments, the application server may further store a correspondence between a page status and at least one of the page identifier or the file address. The application server determines, based on the correspondence between the page status and at least one of the page identifier or the file address, an updated page that needs to be invalidated, and invalidates the updated page based on the page status. If the page status indicates that the updated page has been invalidated, invalidation processing does not need to be performed. If the page status indicates that the updated page is not invalidated, the application server invalidates the updated page based on an access characteristic of the updated page and a storage capacity of the storage.

In some embodiments, for example, the access characteristic is a characteristic of determining whether the updated page is frequently accessed. If the access characteristic of the updated page indicates that the updated page is frequently accessed, the updated page may be referred to as a hot page, and the updated page may not need to be invalidated. If the access characteristic of the updated page indicates that the updated page is not frequently accessed, the updated page may be referred to as a cold page, and the updated page may be invalidated.

In some other embodiments, the updated page stored in the storage of the application server is invalidated based on the storage capacity of the storage of the application server. For example, if the access characteristic of the updated page indicates that the updated page is frequently accessed, the updated page may be referred to as a hot page, and the updated page may not need to be invalidated. If the access characteristic of the updated page indicates that the updated page is not frequently accessed, the updated page may be referred to as a cold page, and the updated page may be invalidated.

Optionally, the application server invalidates, based on the access characteristic of the updated page and the storage capacity of the storage, the updated page stored in the storage of the application server.

In this way, invalidating the updated page stored in the application server releases storage space of the application server used to cache the updated page is released, and facilitates storing a latest updated page obtained by performing the database operation on the page of the database.

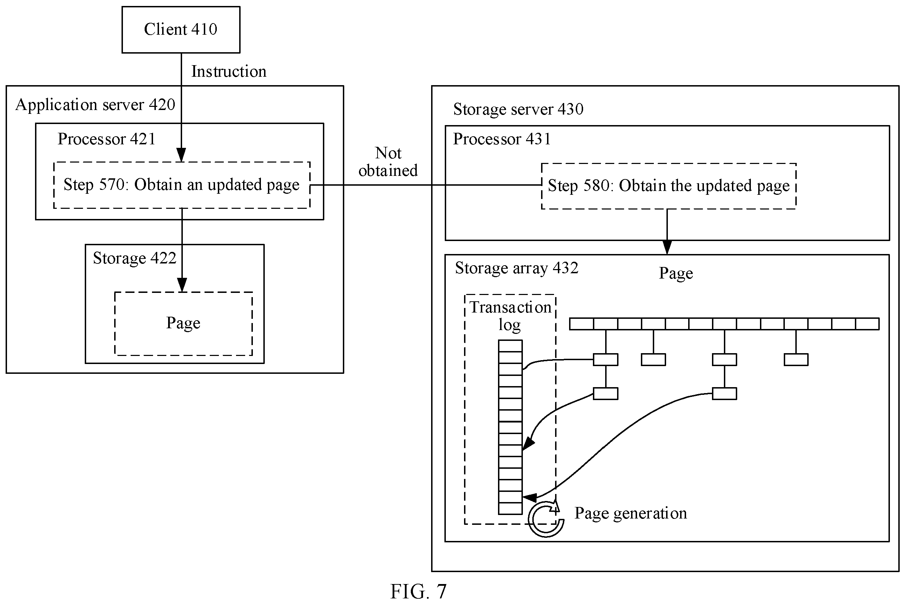

The following describes a solution in which the application server queries an updated page. As shown in FIG. 7, the method includes the following steps.

Step 570: The application server obtains an updated page based on a query request.

The application server obtains the query request. The query request may indicate to perform a database operation on the updated page. The application server may obtain the updated page from a cache. The query request may include a page identifier of the updated page.

In some embodiments, if the application server has invalidated the updated page in the cache, the application server may obtain the updated page from the storage server.

In some other embodiments, when the database is faulty, the application server may obtain the updated page from the storage server.

In some other embodiments, when data needs to be restored after the application server is restarted due to a fault, the updated page may be obtained through querying from the storage server. If the storage server does not store the updated page, the storage server may read a transaction log, and restore the updated page based on the transaction log.

Step 580: The application server obtains the updated page from the storage server.

When the updated page is not obtained from the storage of the application server, the updated page is obtained from the storage server.

In some embodiments, when the updated page is not obtained from the storage of the application server, the updated page is obtained from the storage server. If the updated page has been stored in the storage array, the updated page is returned to the application server.

In some other embodiments, if the updated page is not completely generated in the storage array, the updated page is not returned temporarily, and a request for waiting to read a transaction log and a page is blocked. The storage server reads a linked list of the transaction log based on the transaction log and the stored updated page, and generates a page. After the updated page is generated, the request and the updated page are returned.

In this way, because the updated page is cached in the application server, when the application server needs to perform the database operation on the updated page, the updated page can be obtained as soon as possible. This resolves a problem of long page restoration time, and may ensure reliability and availability of the database.

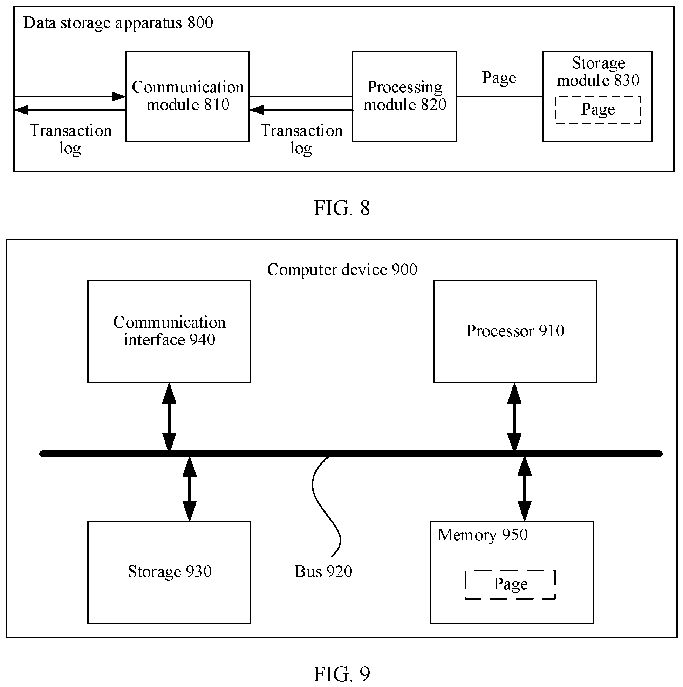

The foregoing describes, in detail with reference to FIG. 1 to FIG. 7, the storage method provided in this application. The following describes, with reference to FIG. 8, a data storage apparatus provided in this application.

FIG. 8 is a diagram of a structure of a possible data storage apparatus according to this application. The data storage apparatus may be configured to implement a function of the application server or the storage server in the foregoing method embodiments, and therefore can also achieve beneficial effects of the foregoing method embodiments. In this embodiment, the data storage apparatus may be the device shown in FIG. 4.

As shown in FIG. 8, the data storage apparatus 800 includes a communication module 810, a processing module 820, and a storage module 830. The data storage apparatus 800 is configured to implement the function of the application server or the storage server in the foregoing method embodiment shown in FIG. 5, FIG. 6, or FIG. 7.

The data storage apparatus 800 is configured to implement the function of the application server in the foregoing method embodiment shown in FIG. 5, FIG. 6, or FIG. 7, and each module is specifically configured to implement the following functions.

The communication module 810 is configured to receive a database instruction of a client.

The processing module 820 performs a database operation on a page of a database based on the database instruction, and is further configured to identify an updated page and a transaction log. For example, the processing module 820 is configured to perform step 510 in FIG. 5.

The processing module 820 caches the updated page in a storage of the application server. For example, the processing module 820 is configured to perform step 520 in FIG. 5.

The storage module 830 is configured to store the updated page.

The communication module 810 is configured to store a transaction log corresponding to the updated page in the storage server. For example, the communication module 810 is configured to perform step 530 in FIG. 5.

The communication module 810 is further configured to receive a response message sent by the storage server. For example, the communication module 810 is configured to perform step 550 in FIG. 6.

The processing module 820 is configured to invalidate the updated page of the application server. For example, the processing module 820 is configured to perform step 560 in FIG. 6.

The processing module 820 is configured to read and obtain the updated page from the application server when the application server is faulty. For example, the processing module 820 is configured to perform step 570 in FIG. 7.

The communication module 810 is configured to send a message for obtaining the updated page from the storage server when the application server is faulty. For example, the communication module 810 is configured to perform step 580 in FIG. 7.

The data storage apparatus 800 is configured to implement the function of the storage server in the foregoing method embodiment shown in FIG. 5, FIG. 6, or FIG. 7, and each module is specifically configured to implement the following functions.

The communication module 810 is configured to receive a transaction log corresponding to an updated page of the application server. For example, the communication module 810 is configured to perform step 530 in FIG. 5.

The storage module 830 is configured to store the transaction log.

The processing module 820 is configured to perform page materialization based on the transaction log. For example, the processing module 820 is configured to perform step 540 in FIG. 6.

The communication module 810 is configured to send a response message to the application server. For example, the communication module 810 is configured to perform step 550 in FIG. 6.

The communication module 810 is configured to receive the updated page read and obtained from a storage array when the application server is faulty. For example, the communication module 810 is configured to perform step 580 in FIG. 7.

The processing module 820 is configured to retrieve an updated log in the storage array; and if there is no updated log, the processing module 820 generates the updated log based on the stored updated page and transaction log. For example, the processing module 820 is configured to perform step 580 in FIG. 7.

It should be understood that the data storage apparatus 800 in this embodiment of this application may be implemented by using an application-specific integrated circuit (application-specific integrated circuit, ASIC) or a programmable logic device (programmable logic device, PLD). The PLD may be a complex programmable logic device (complex programmable logic device, CPLD), a field-programmable gate array (field-programmable gate array, FPGA), generic array logic (generic array logic, GAL), or any combination thereof. When the data storage method shown in FIG. 5, FIG. 6, or FIG. 7 may alternatively be implemented by using software, each module may alternatively be a software module, and the data storage apparatus 800 and each module thereof may alternatively be software modules.

The data storage apparatus 800 according to this embodiment of this application may correspondingly perform the method described in embodiments of this application. In addition, the foregoing and other operations and functions of the units of the data storage apparatus 800 are respectively designed to implement the corresponding processes of the method shown in FIG. 5, FIG. 6, or FIG. 7. For brevity, details are not described herein again.

FIG. 9 is a diagram of a computer device according to this application. As shown in FIG. 9, the computer device 900 includes a processor 910, a bus 920, a storage 930, a communication interface 940, and a memory 950 (which may also be referred to as a main memory (main memory) unit). The processor 910, the storage 930, the memory 950, and the communication interface 940 are connected via the bus 920.

It should be understood that, in this embodiment, the processor 910 may be a CPU, or the processor 910 may be another general-purpose processor, a digital signal processor (digital signal processor, DSP), an ASIC, an FPGA or another programmable logic device, a discrete gate or a transistor logical device, a discrete hardware component, or the like. The general-purpose processor may be a microprocessor, any conventional processor, or the like.

The communication interface 940 is configured to implement communication between the computer device 900 and an external device or component. In this application, the computer device 900 is configured to implement a function of the application server shown in FIG. 5, FIG. 6, or FIG. 7. The communication interface 940 is configured to obtain a database operation instruction, so that the processor 910 performs a database operation based on the instruction, to obtain a transaction log and a generated page. The communication interface 940 is further configured to perform transmission of the transaction log, and store the transaction log in a storage array.

The bus 920 may include a path for transferring information between the foregoing components (for example, the processor 910, the memory 950, and the storage 930). In addition to a data bus, the bus 920 may further include a power bus, a control bus, a status signal bus, and the like. However, for ease of clear description, various types of buses are marked as the bus 920 in the figure. The bus 920 may be a peripheral component interconnect express (Peripheral Component Interconnect Express, PCIe) bus, an extended industry standard architecture (extended industry standard architecture, EISA) bus, a unified bus (unified bus, Ubus or UB), a computer express link (compute express link, CXL), cache coherent interconnect for accelerators (cache coherent interconnect for accelerators, CCIX), or the like. The bus 920 may be classified into an address bus, a data bus, a control bus, and the like.

In an example, the computer device 900 may include a plurality of processors. The processor may be a multi-core (multi-CPU) processor. The processor herein may be one or more devices, circuits, and/or compute units configured to process data (for example, computer program instructions).

It should be noted that, in FIG. 9, only an example in which the computer device 900 includes one processor 910 and one storage 930 is used. The processor 910 and the storage 930 herein each indicate a type of component or device. In a specific embodiment, a quantity of each type of components or devices may be determined based on a service requirement.

The memory 950 may be a volatile memory pool or a non-volatile memory pool, or may include both a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM) that is used as an external cache. By way of example but not limitative descriptions, many forms of RAMs may be used, for example, a static random access memory (static RAM, SRAM), a dynamic random access memory (DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM). The memory 950 is configured to store an updated page.

The storage 930 may correspond to a storage medium for storing the updated page in the foregoing method embodiments, for example, a magnetic disk like a mechanical hard disk drive or a solid-state drive.

It should be understood that the computer device 900 according to this embodiment may correspond to the data storage apparatus 800 in the embodiment, and may correspond to a corresponding entity in any method in FIG. 5, FIG. 6, or FIG. 7. In addition, the foregoing operations of the modules in the data storage apparatus 800 are respectively used to implement corresponding processes of the method in FIG. 5, FIG. 6, or FIG. 7. For brevity, details are not described herein again.

This application provides a storage system. The storage system includes a client, an application server, and a storage server. The client, the application server, and the storage server include a plurality of components. The application server and the storage server are configured to perform the operation steps of the data storage method in the foregoing method embodiments, to store a transaction log and an updated page.

The method steps in embodiments may be implemented in a hardware manner, or may be implemented by executing software instructions by a processor. The software instructions may include a corresponding software module. The software module may be stored in a random access memory (random access memory, RAM), a flash memory, a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), a register, a hard disk drive, a portable hard drive, a CD-ROM, or any other form of storage medium well-known in the art. For example, a storage medium is coupled to a processor, so that the processor can read information from the storage medium and write information into the storage medium. Certainly, the storage medium may be a component of the processor. The processor and the storage medium may be disposed in an ASIC. In addition, the ASIC may be located in a compute device. Certainly, the processor and the storage medium may also exist in the client, the application server, and the storage server as discrete components.

All or some of the foregoing embodiments may be implemented by using software, hardware, firmware, or any combination thereof. When software is used to implement embodiments, all or some of embodiments may be implemented in a form of a computer program product. The computer program product includes one or more computer programs or instructions. When the computer programs or the instructions are loaded and executed on a computer, all or some of procedures or functions in embodiments of this application are executed. The computer may be a general-purpose computer, a dedicated computer, a computer network, a network device, user equipment, or another programmable apparatus. The computer programs or the instructions may be stored in a computer-readable storage medium, or may be transmitted from a computer-readable storage medium to another computer-readable storage medium. For example, the computer programs or the instructions may be transmitted from a website, a computer, a server, or a data center to another website, computer, server, or data center in a wired or wireless manner. The computer-readable storage medium may be any usable medium accessible by a computer, or a data storage device, for example, a server or a data center, integrating one or more usable media. The usable medium may be a magnetic medium, for example, a floppy disk, a hard disk drive, or a magnetic tape, may be an optical medium, for example, a digital video disc (digital video disc, DVD), or may be a semiconductor medium, for example, a solid-state drive (solid-state drive, SSD).

The foregoing descriptions are merely specific implementations of this application, but are not intended to limit the protection scope of this application. Any equivalent modification or replacement readily conceived by a person skilled in the art within the technical scope disclosed in this application shall fall within the protection scope of this application. Therefore, the protection scope of this application shall be subject to the protection scope of the claims.

## Claims

1. A data storage method, wherein an application server is connected to a storage server, the application server is configured to run a database, and the storage server is configured to store data in the database; and the method comprises:
performing a database operation on a page of the database to obtain an updated page;
caching the updated page in a storage of the application server; and
storing a transaction log corresponding to the updated page in the storage server.

2. The method according to claim 1, wherein caching the updated page in the storage of the application server comprises:
caching a page identifier and the updated page in the storage of the application server, wherein the page identifier indicates the page and the updated page.

3. The method according to claim 1 or 2, wherein storing the transaction log corresponding to the updated page in the storage server comprises:
storing the page identifier and the transaction log in the storage server, wherein there is a correspondence between the page identifier and the transaction log, and the page identifier indicates the page and the updated page.

4. The method according to any one of claims 1 to 3, wherein the method further comprises:
receiving a response message sent by the storage server, wherein the response message indicates that the updated page indicated by the page identifier corresponding to the transaction log has been stored; and
invalidating the updated page stored in the storage of the application server.

5. The method according to claim 4, wherein invalidating the updated page stored in the storage of the application server comprises:
invalidating, based on an access characteristic of the updated page, the updated page stored in the storage of the application server.

6. The method according to claim 4, wherein invalidating the updated page stored in the storage of the application server comprises:
invalidating, based on a storage capacity of the storage of the application server, the updated page stored in the storage of the application server.

7. The method according to any one of claims 1 to 6, wherein the method further comprises:
obtaining the updated page from the storage of the application server based on a query request.

8. The method according to any one of claims 1 to 6, wherein the method further comprises:
when the updated page is not read from the storage of the application server, obtaining the updated page from the storage server.

9. A data storage apparatus, comprising:
a communication module, configured to obtain a database operation; and
a processing module, configured to perform the database operation on a page of a database to obtain an updated page, wherein
the processing module is further configured to cache the updated page in a storage of the application server; and
the processing module is further configured to store a transaction log corresponding to the updated page in the storage server.

10. A computer device, wherein the computer device comprises a storage and a plurality of processors, the storage is configured to store a set of computer instructions, and when executing the set of computer instructions, the processor performs operation steps of the method according to any one of claims 1 to 8.

11. A storage system, wherein the storage system comprises an application server and a storage server, the application server is configured to perform operation steps of the method according to any one of claims 1 to 8, and cache a page of a database, and the storage server is configured to persistently store the page of the database.
